(19) Europäisches Patentamt
European Patent Office
Office européen des brevets

(11) **EP 2 896 828 B1**

(12) **EUROPEAN PATENT SPECIFICATION**

(45) Date of publication and mention
of the grant of the patent:
**16.11.2016 Bulletin 2016/46**

(21) Application number: **13875197.9**

(22) Date of filing: **14.02.2013**

(51) Int Cl.:
**F03D 15/00** (2016.01)        **F03D 13/20** (2016.01)

(86) International application number:
**PCT/JP2013/053504**

(87) International publication number:
**WO 2014/125593 (21.08.2014 Gazette 2014/34)**

(54) **WIND TURBINE GENERATOR**

WINDENERGIEANLAGE

GÉNÉRATEUR DE TURBINE ÉOLIENNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.07.2015 Bulletin 2015/30**

(73) Proprietor: **Mitsubishi Heavy Industries, Ltd.
Tokyo 108-8215 (JP)**

(72) Inventors:
• **NISHINO, Hiroshi
Tokyo 108-8215 (JP)**

• **HAYASHI, Kentaro
Tokyo 108-8215 (JP)**

(74) Representative: **Intès, Didier Gérard André et al
Cabinet Beau de Loménie
158 rue de l'Université
75340 Paris Cedex 07 (FR)**

(56) References cited:
**EP-A1- 1 533 521         EP-A2- 1 065 374
EP-A2- 2 154 368         WO-A1-2005/095794
WO-A2-2009/080028     JP-A- 2006 046 227
JP-A- 2007 040 146       JP-A- 2008 151 119
JP-A- 2008 540 918       JP-A- 2010 150 985**

## Description

TECHNICAL FIELD

The present disclosure relates to a wind turbine power generating apparatus.

BACKGROUND

Wind turbine power generating apparatuses have become widely used in recent years in view of preservation of the global environment. A wind turbine power generating apparatus includes a tower of a predetermined height and a nacelle disposed on the top of the tower. The nacelle includes a generator and a speed-increasing unit. At least one blade rotated by wind power is mounted to the nacelle, so that the generator is driven by the rotation force of the blade serving as a driving force to generate electric power.

In a wind turbine power generating apparatus, noise may be produced from oscillation which occurs during operation of a generator or a speed-increasing unit and propagates in the form of waves on the wall surface of a tower, the wall surface serving as an oscillation plate. As a conventional technique for reducing the structural borne sound due to such oscillatory propagation, Patent Document 1 discloses a technique of providing a plurality of blocking masses in a tower. The blocking masses reduce propagation of oscillation which has a frequency corresponding to a property of the blocking masses such as the size, which makes it possible to reduce the operation noise.

Citation List

Patent Literature

Patent Document 1: Japanese Patent Application Pub. No. 3342148

EP 1 533 521 A1 discloses a wind turbine in which stiffening layers of fiber-reinforced plastic are arranged around the wall of the tower.

WO 2009/080028 A2 discloses a wind turbine in which noise reducing means comprising beams and damping means are arranged around the inner circumferential surface of the wall of the tower.

EP 1 065 374 A2 discloses a wind turbine in which elastomeric components are arranged, e.g. between a transmission and a machine frame, in order to reduce vibrations within the wind turbine.

SUMMARY

Technical Problem

Although the blocking masses are effective in reducing propagation of oscillation, the shape of the blocking masses need to be determined so that the rotation shaft is not decentered in a case where the blocking masses are provided for a rotational body.

In view of the above issues, an object of at least one embodiment of the present invention is to provide a novel and improved wind turbine power generating apparatus capable of reducing structural borne sound due to oscillatory propagation of a particular frequency, with a simplified configuration.

The present invention provides a wind turbine power generating apparatus according which is defined in appended claim 1 and includes: a nacelle supported on a tower; a rotor which includes a blade for receiving wind power, the rotor being configured to rotate upon receiving wind at the blade; a rotor shaft coupled to the rotor and supported rotatably on the nacelle; a generator which generates electric power from rotational force of the rotor shaft; and at least two rigidity-enhancing parts disposed on an inner circumferential surface or an outer circumferential surface of the rotor shaft, at an interval which is set so as to correspond to a frequency of oscillation caused during operation of the generator, or oscillation caused during operation of a drivetrain for transmitting the rotational force of the rotor shaft to the generator in a case where the drivetrain is provided. The at least two rigidity-enhancing parts are arranged in a propagating direction of the oscillation.

With the above wind turbine power generating apparatus, it is possible to select the frequency of oscillation that is to be reduced in accordance with the interval between the at least two rigidity-enhancing parts. Further, the interval between the rigidity-enhancing parts is set corresponding to the frequency of the oscillation generated during operation of the generator or during operation of the drivetrain. Thus, with the rigidity-enhancing parts, propagation of the bending wave produced by the oscillation generated during operation of the generator or the oscillation of the drivetrain is reduced, which makes it possible to reduce the structural borne sound from the blade or the tower due to propagation of the bending wave.

In one embodiment of the present invention, when the interval is defined as an interval L and a wavelength of the oscillation caused during the operation of the generator or the drivetrain is defined as $\lambda$, the interval L of the rigidity-enhancing parts is set so as to satisfy a following relationship, using an integer "n".

$$L = \frac{\lambda}{2}\left(n - \frac{1}{2}\right)$$

With the above configuration, it is possible to set the interval of the rigidity-enhancing parts on the basis of the wavelength of the oscillation of the generator or the drivetrain, which makes it possible to reduce the propagation of a bending wave generated by oscillation from the generator or the drivetrain more precisely.

In one embodiment of the present invention, the rigidity-enhancing parts include at least one of a rib member disposed on the inner circumferential surface or the outer circumferential surface, a bearing of the rotor shaft, or a flange.

With the above configuration, using one of the rib members, the bearing of the rotor shaft, or the flange makes it possible to reduce the oscillatory propagation of a bending wave generated by oscillation of the generator or the drivetrain with a simplified structure. Especially, if the bearing of the rotor shaft or the flange is used, it is possible to reduce the number of members to be additionally provided, which makes it possible to reduce the oscillatory propagation of a bending wave generated by oscillation of the generator or the drivetrain with a simplified structure.

In one embodiment of the present invention, the drivetrain includes a hydraulic pump configured to be driven by rotation of the rotor shaft, and a hydraulic motor configured to be driven by pressurized oil generated in the hydraulic pump and to enable the generator to generate electric power.

With the above configuration, it is possible to reduce the oscillatory propagation of the bending wave even if the bending wave is generated by oscillation of the hydraulic pump or the hydraulic drive.

As described above, according to at least one embodiment of the prevent invention, provided is a novel and improved wind turbine power generating apparatus capable of reducing the structural borne sound due to oscillatory propagation of a specific frequency with a simplified structure.

BRIEF DESCRIPTION OF DRAWINGS

FIG. 1 is a diagram of an overall configuration of a wind turbine power generating apparatus according to one embodiment of the present invention.
FIG. 2 is a detail view of an exemplary configuration of the wind turbine power generating apparatus according to one embodiment of the present invention.
FIG. 3 is a diagram of an exemplary configuration of rigidity-enhancing parts of the wind turbine power generating apparatus according to one embodiment of the present invention.
FIG. 4 is an illustration of an example of a bending wave in a case where the rigidity-enhancing parts are at nodes of the wave.
FIG. 5 is an illustration of an example of a bending wave in a case where the rigidity-enhancing parts are at anti-nodes of the wave.
FIG. 6 is a graph of a relationship between a frequency and a damping constant of each of a working example and a comparative example.
FIG. 7 is a detail view of an exemplary configuration of a wind turbine power generating apparatus according to another embodiment of the present disclosure, which is not claimed and is included for illustrative purposes.

DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

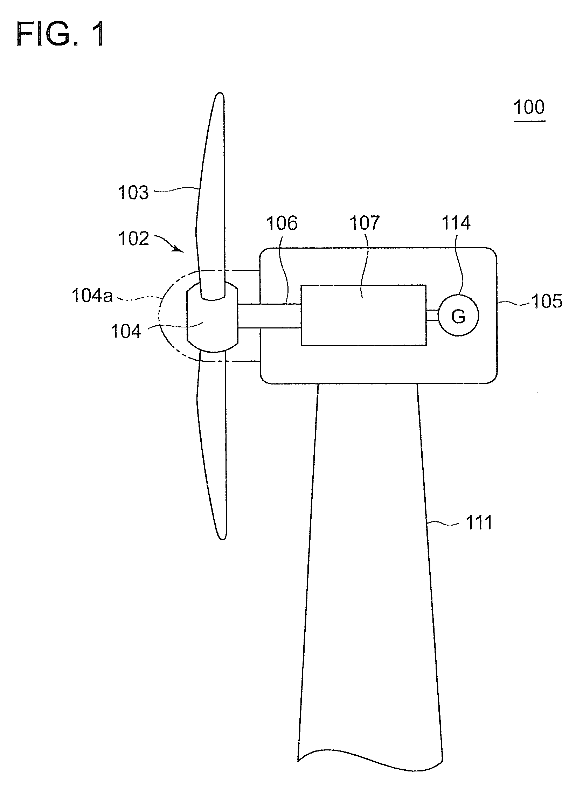

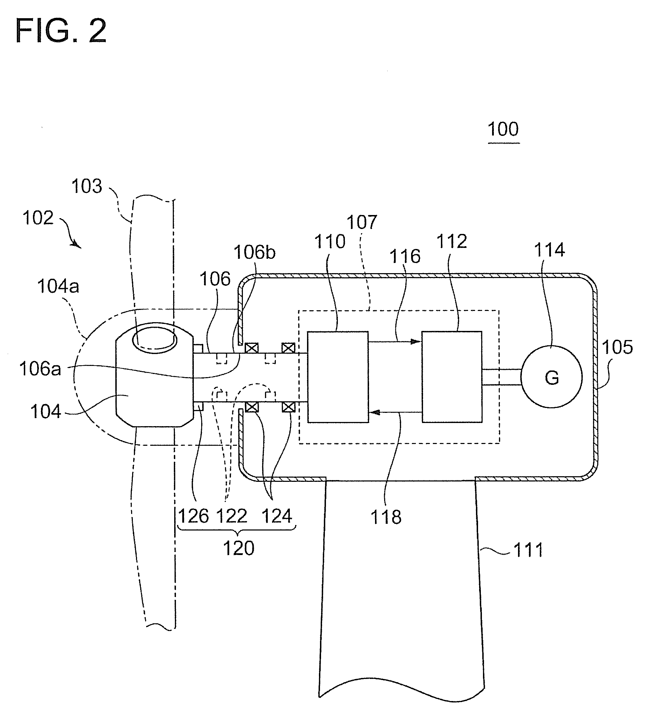

First, the configuration of the wind turbine power generating apparatus according to one embodiment of the present invention will be described with reference to the drawings. FIG. 1 is a diagram of an overall configuration of a wind turbine power generating apparatus according to one embodiment of the present invention. FIG. 2 is a detail view of an exemplary configuration of the wind turbine power generating apparatus according to one embodiment of the present invention.

In one embodiment, the wind turbine power generating apparatus 100 includes a rotor 102 which rotates upon receiving wind, a nacelle 105 which rotatably supports a rotor shaft 106 of the rotor 102, a drivetrain 107 for increasing the rotation speed of the rotor shaft 106, a tower 111 of a substantially cylindrical shape supporting the nacelle 105, and a generator 114 which generates electric power. The nacelle 105 is capable of yaw rotating about the tower 111.

The rotor 102 includes at least one blade 103 and a hub 104 to which the blade 103 is mounted. The rotor shaft 106 is mounted to the hub 104, and the rotor 102 is rotated with the rotor shaft 106 by the wind power received at the blade 103. This rotation is inputted into the drivetrain 107 via the rotor shaft 106. The hub 104 may be covered by a hub cover 104a.

The drivetrain 107 is a speed-increasing unit for increasing the rotation speed of the rotor shaft 106 and inputting the rotation to the generator 114. In one embodiment, the drivetrain 107 includes a hydraulic pump 110 coupled to the rotor shaft 106, a hydraulic motor 112 coupled to the generator 114, and oil circulation lines disposed between the hydraulic pump 110 and the hydraulic motor 112. The circulation lines include a high pressure oil line 116 and a low pressure oil line 118. The high pressure oil line 116 connects an outlet side of the hydraulic pump 110 and an inlet side of the hydraulic motor 112, while the low pressure oil line 118 connects an inlet side of the hydraulic pump 110 and an outlet side of the hydraulic motor 112.

The hydraulic pump 110 is driven by the rotor shaft 106 to generate high pressure working oil. The high pressure working oil is supplied to the hydraulic motor 112 through the high pressure oil line 116, and then drives the hydraulic motor 112. At this time, the generator 114 coupled to the hydraulic motor 112 is driven to generate electric power. The working oil having been discharged from the hydraulic motor 112 is supplied to the hydraulic pump 110 through the low pressure oil line 118, has its pressure increased in the hydraulic pump 110, and then returns to the hydraulic motor 112.

In one embodiment, the drivetrain 107 is a hydraulic transmission described above, though the drivetrain may be a gearbox including planetary gears or the like. In recent years, however, the wind turbine power generating apparatus 100 has increased in size. Thus, a hydraulic transmission is more preferable as the drivetrain 107 being a speed-increasing mechanism, because more weight can be reduced in a hydraulic transmission than in a gearbox.

The rotor shaft 106 is a hollow member of a substantially cylindrical shape including rigid metal material such as iron. In one embodiment, the rotor shaft 106 includes, as illustrated in FIG. 2, two rib members 122 serving as rigidity-enhancing parts 120 for improving rigidity of the rotor shaft 106, on the inner circumferential surface 106a of the rotor shaft 106. The number of the rib members 122 is at least two, and the rib members 122 are arranged at an interval which is set corresponding to the frequency of oscillation caused during operation of the hydraulic pump 110 of the drivetrain 107, in the propagating direction of the oscillation.

As described above, since the rib members 122 are mounted to the inner circumferential surface 106a of the rotor shaft 106, the inner circumferential surface 106a is fixed so as not to oscillate at positions where the rib members 122 are disposed. As a result, it is possible to reduce the structural borne sound due to the oscillatory propagation from the hydraulic pump 110.

While two rib members 122 are disposed on the inner circumferential surface 106a of the rotor shaft 106 in the embodiment illustrated in FIG. 2, it is sufficient if the number of the rib members 122 is at least two. Thus, three or more rib members 122 may be provided.

Further, besides the rib members 122 disposed on the inner circumferential surface 106a of the rotor shaft 106, a flange 126 disposed on an end of the outer circumferential surface 106b of the rotor shaft 106 or a bearing 124 for supporting the rotor shaft 106 rotatably may be employed as the rigidity-enhancing parts 120. That is, in addition to attaching the rib members 122 to the rotor shaft 106, the existing bearing 124 and flange 126 may be also employed as the rigidity-enhancing parts 120 because the bearing 124 and the flange 126 are also capable of preventing oscillation of the outer circumferential surface 106b of the rotor shaft 106. As described above, utilizing the bearing 124 and the flange 126 of the rotor shaft 106 makes it possible to reduce the number of members to be additionally attached, and to reduce oscillatory propagation of a bending wave caused by oscillation of the drivetrain 107 with more simplified configuration.

Further, the rib members 122 may be disposed on the outer circumferential surface 106b of the rotor shaft 106. That is, to reduce the structural borne sound due to oscillatory propagation from the drivetrain 107, it is sufficient if there are at least two rib members 122 being the rigidity-enhancing parts 120 disposed on at least one of the inner circumferential surface 106a or the outer circumferential surface 106b of the rotor shaft 106.

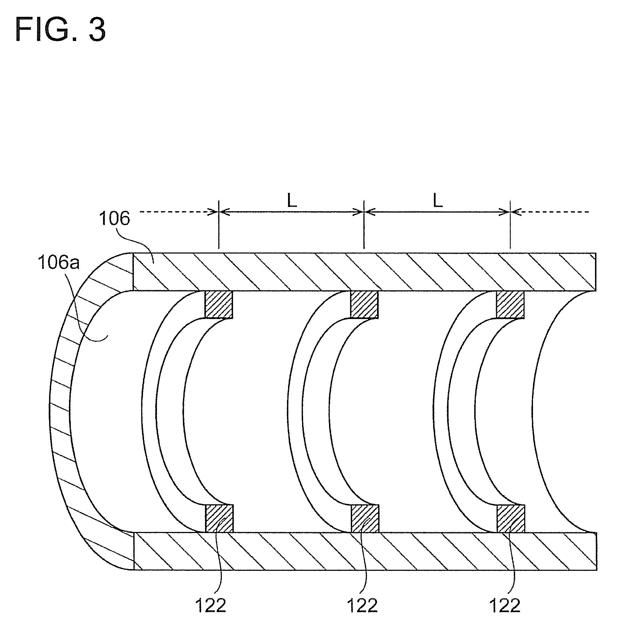

Next, the configuration of the rigidity-enhancing parts included in the wind turbine power generating apparatus according to one embodiment of the present invention will be described in reference to the drawings. FIG. 3 is a diagram of an exemplary configuration of rigidity-enhancing parts of the wind turbine power generating apparatus according to one embodiment of the present invention.

The oscillation of structural borne sound is mainly caused by a bending wave. Thus, it is effective to reduce propagation of a bending wave in order to reduce structural borne sound. In view of this, in one embodiment, as described in FIG. 3, rib members 122 of an annular shape are additionally disposed on the inner circumferential surface 106a of the rotor shaft 106 being a hollow cylindrical member at a predetermined interval L to reduce oscillatory propagation of a bending wave with a specific frequency. The rib members 122 include a rigid material such as metal. The attachment structure of the rib members 122 may include an attachment structure in which an annular member is inserted into the rotor shaft 106, an attachment structure in which a plate member is bended and inserted into the rotor shaft 106, or an attachment structure in which welding is overlaid at positions where the rib members 122 are to be disposed.

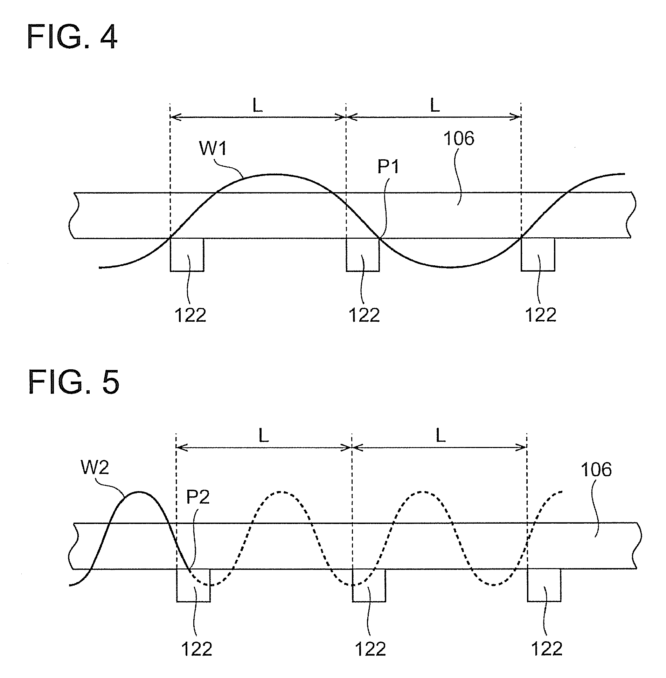

When the rib members 122 are attached to the inner circumferential surface 106a of the rotor shaft 106 at the predetermined interval L, the inner circumferential surface 106a is fixed so as not to oscillate at positions where the rib members 122 are disposed. As described above, when the rib members 122 are disposed, a bending wave W1 of oscillation having a node P1 at one of the rib members 122 passes through as illustrated in FIG. 4, while a bending wave W2 of oscillation having an antinode, not a node, at one of the rib members 122, is blocked, as illustrated in FIG. 5.

The oscillation frequencies (excitation frequencies) of the drivetrain 107 include a number of frequencies, and each of the excitation frequencies has a bending wave that tries to propagate through the rotor shaft 106. However, since the rib members 122 constitute the support part or the fixation part of the rotor shaft 106, a bending wave having nodes at the rib members 122 easily propagates on the rotor shaft 106, while a wave having no node at the rib members 122 has larger damping, which makes it possible to reduce oscillation.

The above frequency to be reduced is determined from the interval of the rib members 122. Thus, in one embodiment, the interval L of the rib members 122 being the rigidity-enhancing parts 120 is determined from a specific frequency of a bending wave whose oscillatory propagation is desired to be reduced, and accordingly, the rib members 122 are additionally provided. When the interval between the rib members 122 is defined as L, and the wavelength of oscillation caused during operation of the hydraulic pump 110 of the drivetrain 107 is defined as $\lambda$, the interval L of the rib members 122 is set so as to satisfy the following relationship, using an integer "n".

$$L = \frac{\lambda}{2}\left(n - \frac{1}{2}\right)$$

The main source of oscillation of the drivetrain 107 is the hydraulic pump 110, and the oscillation frequency caused during operation of the hydraulic pump 110 is within the range of from not less than 300Hz to not more than 400Hz. Thus, to reduce oscillatory propagation of a bending wave of an oscillation frequency band within the above range to the rotor shaft 106, the interval of the rib members 122 is determined to be a value of approximately 1 to 2m from the above relationship. In particular, at this time, the wavelength $\lambda$, which brings about a reducing effect of oscillatory propagation from the drivetrain 107, is a wavelength which does not have nodes at the rib members 122. Thus, the interval L of the rib members 122 is adjusted so as to achieve the above effect. In this way, setting the interval L of the rib members 122 on the basis of the oscillation frequency of the hydraulic pump 110 being the source of oscillation of the drivetrain 107 makes it possible to reduce the oscillatory propagation of a bending wave caused by oscillation of the drivetrain 107 to the rotor shaft 106 more precisely.

In a conventional wind turbine power generating apparatus, large oscillation occurs in a drivetrain such as a gearbox and a hydraulic drive, and propagates to blades to produce operation noise due to radiation of structural borne sound from the large radiating surface of the blade. Oscillation due to a drivetrain in particular is one of the generation sources of the operation noise, because oscillation of a gearbox, a hydraulic drive or the like transmits to each part of the blade or the like by propagating on a rotor shaft, a rotor head, or the like.

In view of this, in one embodiment, to reduce the above operation noise, the rib members 122 are attached to the inner circumferential surface 106a of the rotor shaft 106 at the above interval L, and in the propagating direction of the oscillation, so that the inner circumferential surface 106 is fixed at positions where the rib members 122 are disposed, so as not to oscillate due to oscillatory propagation from the drivetrain 107. In this way, providing the rib members 122 reduces the structural borne sound due to the oscillatory propagation from the drivetrain 107 to the rotor shaft 106. As a result, it is possible to reduce the operation noise produced via the rotor shaft 106 by radiating structural borne sound from the blade 103 serving as a radiation plane.

The drivetrain 107 such as a gearbox and a hydraulic pump produces oscillation at a specific frequency.

Thus, it is unnecessary to reduce oscillation over the entire range of the frequencies. Thus, in one embodiment, a technique is employed such that the rib members 122 being the rigidity-enhancing parts 120 are disposed on the rotor shaft 106 at the above described specific interval to reduce the oscillation level of a specific frequency, which enables tuning of a specific frequency.

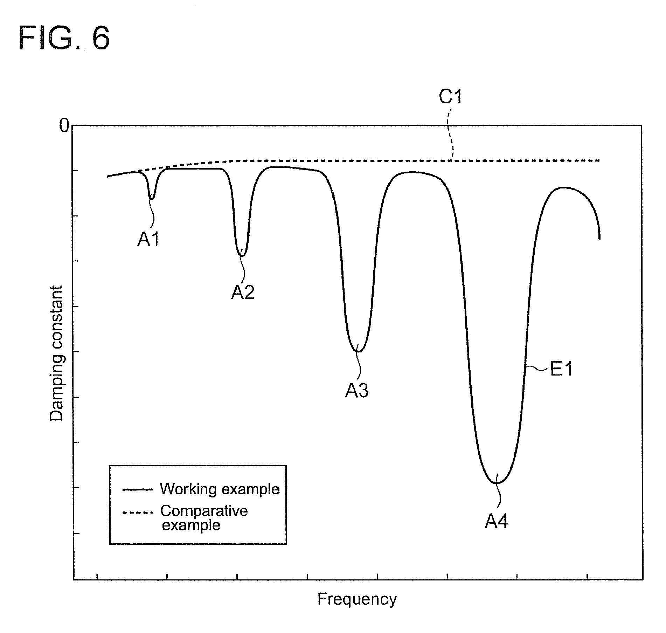

As described above, in one embodiment, the rib members 122 are disposed on the rotor shaft 106 to reduce the oscillation level of a specific frequency due to oscillation, which is to be reduced, from the drivetrain 107. FIG. 6 is a graph of a relationship between a frequency and a damping constant of each of a working example and a comparative example.

As illustrated in FIG. 6, in the comparative example C1 where the rib members are not provided, the damping constant is substantially constant in all of the frequency bands. In contrast, in the working example E1 where the rib members are provided, the damping constant decreases in particular frequency bands. Thus, in one embodiment, the interval of the rib members 122 is adjusted so that the specific frequency band of a bending wave subject to damping becomes one of the frequency bands at which the damping constant decreases. As a result, the oscillatory propagation caused by the drivetrain 107 is reduced. Further, in one embodiment, each of the specific frequency bands A1 to A4 with decreasing damping constants has a frequency width of approximately 50Hz. Thus, the frequency of a bending wave having a width of approximately 50Hz from the specific frequency corresponding to the interval at which the rib members are disposed, is the frequency band which can be reduced.

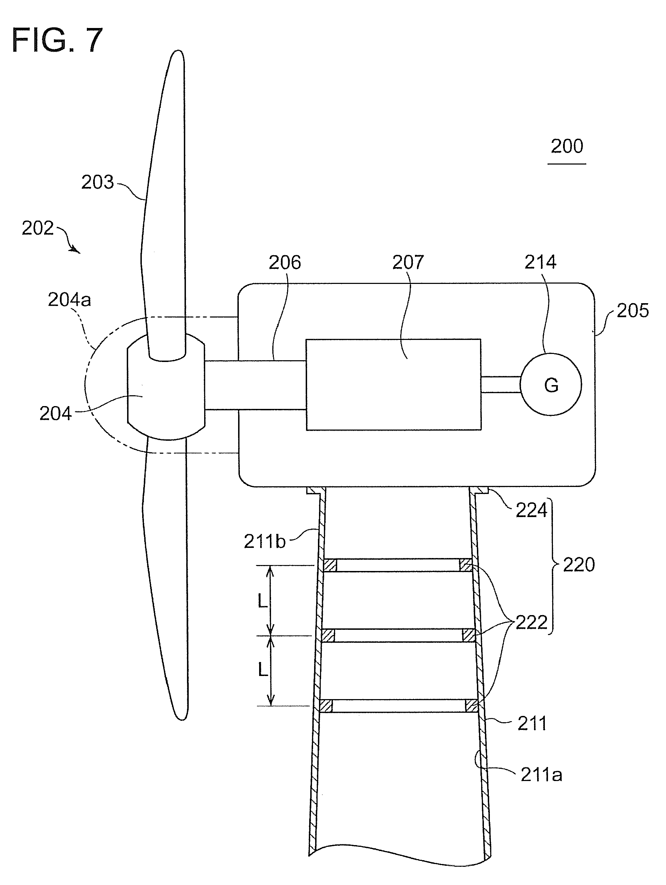

Next, another embodiment of the present disclosure, which is not claimed and is included for illustrative purposes, will be described with reference to the drawings. FIG. 7 is a detail view of an exemplary configuration of a wind turbine power generating apparatus according to another embodiment of the present disclosure.

In the present embodiment, the wind turbine power generating apparatus 200 includes a rotor 202 which rotates upon receiving wind, a nacelle 205 which rotatably supports a shaft 206 of the rotor 202, a drivetrain 207 for increasing the rotation speed of the rotor shaft 206, a tower 211 of a substantially cylindrical shape supporting the nacelle 205, and a generator 214 which generates electric power. The nacelle 205 is yaw rotatable about the tower 211.

The rotor 202 includes at least one blade 203 and a hub 204 to which the blade 203 is mounted. The rotor shaft 206 is mounted to the hub 204 and the rotor 202 is rotated with the rotor shaft 206 by the wind power received at the blade 203. This rotation is inputted into the drivetrain 207 via the rotor shaft 206. The hub 204 may be covered by a hub cover 204a.

In the present embodiment, the rigidity-enhancing parts are disposed on positions different from those in the above embodiment. That is, as illustrated in FIG.

7, three rib members 222 are disposed on the inner circumferential surface 211a of the tower 211 as the rigidity-enhancing parts 220 for improving rigidity to reduce the structural borne sound due to oscillatory propagation from the drivetrain 207, in the present embodiment. While the number of the rib members 222 disposed on the inner circumferential surface 211a of the tower 211 is three in the present embodiment illustrated in FIG. 7, it is sufficient if there are at least two rib members 222, so the number is not limited to three.

When the interval between the rib members 222 is defined as L, and the wavelength of oscillation caused during operation of the drivetrain 207 is defined as λ, the interval L of the rib members 122 is set so as to satisfy the following relationship, using an integer "n".

$$L = \frac{\lambda}{2}\left(n - \frac{1}{2}\right)$$

The oscillation frequency "f", caused during operation of the drivetrain 207, is within the range of from not less than 300Hz to not more than 400Hz. Thus, the interval of the rib members 222 is set to approximately 1 to 2m. In particular, at this time, the wavelength λ, which brings about a reducing effect of oscillatory propagation from the drivetrain 207, is a wavelength which does not have nodes at the rib members 122. Thus, the interval L of the rib members 222 is adjusted so as to achieve the above effect. In this way, setting the interval L of the rib members 222 on the basis of the oscillation frequency of the drivetrain 207 makes it possible to reduce the oscillatory propagation of a bending wave caused by oscillation of the drivetrain 207 to the tower 211 more precisely.

As described above, the rib members 222 are attached to the inner circumferential surface 211a of the tower 211 at the above interval L, so that the inner circumferential surface 211a is fixed so as not to oscillate at positions where the rib members 222 are disposed. In this way, the structural borne sound due to the oscillatory propagation from the drivetrain 207 to the tower 211 is reduced. As a result, it is possible to reduce the operation noise produced by radiation of structural borne sound from the outer circumferential surface 211b of the tower 211 serving as a radiation plane.

Besides the rib members 222 disposed on the inner circumferential surface 211a of the tower 211, a flange 224 disposed on an end of the outer circumferential surface 211b of the tower 211 may be employed as one of the rigidity-enhancing parts 220. That is, in addition to attaching the rib members 222 to the inner circumferential surface 211a of the tower 211, the existing flange 224 may be also employed as one of the rigidity-enhancing parts 220 because the flange 224 is also capable of preventing oscillation of the outer circumferential surface 211b of the tower 211.

Further, the rib members 222 may be disposed on the outer circumferential surface 211b of the tower 211. That is, to reduce the structural borne sound due to oscillatory propagation from the drivetrain 207, it is sufficient if at least two of the rigidity-enhancing parts 220 are disposed on at least one of the inner circumferential surface 211a or the outer circumferential surface 211b of the tower 211.

Further, while the rib members 222 are disposed on the inner circumferential surface 211a of the tower 211, the rib members 222 may be disposed further on at least one of the inner circumferential surface or the outer circumferential surface of the rotor shaft 206. In this way, with the rib members 222 being disposed on at least one of the inner circumferential surface of the outer circumferential surface of the rotor shaft 206 in addition to the tower 211, it is possible to reduce the oscillatory propagation from the drivetrain 207 to the blade 203 and the tower 211. Thus, it is possible to restrict noise due to radiation of structural borne sound from the radiating plane of the blade 203 and the tower 211.

Each embodiment of the present invention were described in detail above, but the present invention is not limited thereto, as it will be understood easily by those skilled in the art, and various amendments and modifications may be implemented within a scope that does not depart from the present invention.

For instance, a term which has been described at least once in the specification or the drawings, associated with another term having a broader or similar meaning, may be substituted by this other term anywhere in the specification and the drawings. Further, the configuration and operation of the wind turbine power generating apparatus are not limited to those described in each embodiment of the present invention, and a wide range of variations can be adopted.

Further, while the drivetrain increases the rotation speed of the rotor shaft and transmits the rotational force to the generator in the wind turbine power generating apparatus of each above embodiment, the present invention is applicable to a gear-less wind turbine power generating apparatus, which does not include a drivetrain. Specifically, in a case where rotation of a rotor shaft is transmitted directly to a generator, oscillatory propagation from the generator is reduced to restrict operation noise.

Reference Signs List

| | |
|---|---|
| 100 | Wind turbine power generating apparatus |
| 102 | Rotor |
| 103 | Blade |
| 104 | Hub |
| 106 | Rotor shaft |
| 106a | Inner circumferential surface |
| 106b | Outer circumferential surface |
| 110 | Hydraulic pump |

112    Hydraulic motor
114    Generator
116    High pressure oil line
118    Low pressure oil line
120    Rigidity-enhancing part
122    Rib member
124    Bearing
126    Flange

## Claims

1.  A wind turbine power generating apparatus (100), comprising:

    a nacelle (105) supported on a tower (111);
    a rotor (102) which includes a blade (103) for receiving wind power, the rotor being configured to rotate upon receiving wind at the blade;
    a rotor shaft (106) coupled to the rotor and supported rotatably on the nacelle (105);
    a generator (114) configured to generate electric power from rotational force of the rotor shaft;
    the wind turbine power generating apparatus being **characterized in that** it comprises at least two rigidity-enhancing parts (120) disposed on an inner circumferential surface or an outer circumferential surface of the rotor shaft (106), at an interval which is set so as to correspond to a frequency of oscillation caused during operation of the generator (114), or oscillation caused during operation of a drivetrain (107) for transmitting the rotational force of the rotor shaft (106) to the generator (114) in a case where the drivetrain is provided, the at least two rigidity-enhancing parts (120) being arranged in a propagating direction of the oscillation.

2.  The wind turbine power generating apparatus according to claim 1,
    wherein, when the interval is defined as an interval L and a wavelength of the oscillation caused during the operation of the generator (114) or the drivetrain (107) is defined as $\lambda$, the interval L of the rigidity-enhancing parts (120) is set so as to satisfy a following relationship, using an integer "n".

$$L = \frac{\lambda}{2}\left(n - \frac{1}{2}\right)$$

3.  The wind turbine power generating apparatus according to claim 2,
    wherein the rigidity-enhancing parts (120) include at least one of a rib member (122) disposed on the inner circumferential surface or the outer circumferential surface, a bearing (124) of the rotor shaft (106), or a flange (126).

4.  The wind turbine power generating apparatus according to any one of claims 1 to 3,
    wherein the drivetrain (107) includes a hydraulic pump (110) configured to be driven by rotation of the rotor shaft (106), and a hydraulic motor (112) configured to be driven by pressurized oil generated in the hydraulic pump (110) and to enable the generator (114) to generate electric power.

## Patentansprüche

1.  Windenergieanlage (100), umfassend:

    eine Gondel (105), die auf einem Turm (111) getragen wird,
    einen Rotor (102), der ein Rotorblatt (103) zum Aufnehmen von Windkraft umfasst, wobei der Rotor dazu ausgebildet ist, sich beim Aufnehmen von Wind an dem Rotorblatt zu drehen,
    eine Rotorwelle (106), die mit dem Rotor gekoppelt und drehbar an der Gondel (105) gelagert ist,
    einen Generator (114), der dazu ausgebildet ist, aus Rotationskraft der Rotorwelle elektrische Energie zu erzeugen,
    wobei die Windenergieanlage **dadurch gekennzeichnet ist, dass** sie umfasst:

    mindestens zwei festigkeitserhöhende Teile (120), die an einer Innenumfangsoberfläche oder einer Außenumfangsoberfläche der Rotorwelle (106) in einem Abstand angeordnet sind, der derart eingestellt ist, dass er einer Frequenz einer Schwingung, die während des Betriebs des Generators (114) herbeigeführt wird, oder einer Schwingung, die während des Betriebs eines Antriebsstrangs (107) zum Übertragen der Rotationskraft der Rotorwelle (106) auf den Generator (114) in einem Fall, in dem der Antriebsstrang vorgesehen ist, herbeigeführt wird, entspricht, wobei die mindestens zwei festigkeitserhöhenden Teile (120) in einer Ausbreitungsrichtung der Schwingung angeordnet sind.

2.  Windenergieanlage nach Anspruch 1,
    wobei, wenn der Abstand als Abstand L definiert ist und eine Wellenlänge der Schwingung, die während des Betriebs des Generators (114) oder des Antriebsstrangs (107) herbeigeführt wird, als $\lambda$ definiert ist, der Abstand L der festigkeitserhöhenden Teile (120) derart eingestellt wird, um eine folgende Beziehung zu erfüllen, wobei eine Ganzzahl "n" verwendet wird:

$$L = \frac{\lambda}{2}\left(n - \frac{1}{2}\right)$$

3. Windenergieanlage nach Anspruch 2,
   wobei die festigkeitserhöhenden Teile (120) mindestens eines aus der Gruppe umfassend ein Rippenglied (122), das an der Innenumfangsoberfläche oder der Außenumfangsoberfläche angeordnet ist, ein Lager (124) der Rotorwelle (106) oder einen Flansch (126) umfassen.

4. Windenergieanlage nach einem beliebigen der Ansprüche 1 bis 3,
   wobei der Antriebsstrang (107) eine Hydraulikpumpe (110), die dazu ausgebildet ist, durch Drehung der Rotorwelle (106) angetrieben zu werden, und einen Hydraulikmotor (112), der dazu ausgebildet ist, durch in der Hydraulikpumpe (110) erzeugtes Drucköl angetrieben zu werden und zu ermöglichen, dass der Generator (114) elektrische Energie erzeugt, umfasst.

**Revendications**

1. Appareil de génération d'énergie à éolienne (100), comprenant :

   une nacelle (105) supportée sur une tour (111) ;
   un rotor (102) qui comprend une pale (103) pour recevoir de l'énergie éolienne, le rotor étant configuré pour tourner lorsque du vent est reçu sur la pale ;
   un arbre de rotor (106) couplé au rotor et supporté de façon rotative sur la nacelle (105) ;
   une génératrice (114) configurée pour générer de l'énergie électrique à partir d'une force de rotation de l'arbre de rotor ;
   l'appareil de génération d'énergie à éolienne étant **caractérisé en ce qu'**il comporte
   au moins deux parties d'amélioration de la rigidité (120) disposées sur une surface circonférentielle intérieure ou une surface circonférentielle extérieure de l'arbre de rotor (106), à un intervalle qui est établi de façon à correspondre à une fréquence d'oscillation provoquée pendant un fonctionnement de la génératrice (114), ou d'oscillation provoquée pendant le fonctionnement d'une transmission (107) destinée à transmettre la force de rotation de l'arbre de rotor (106) à la génératrice (114) dans un cas où la transmission est prévue, les au moins deux parties d'amélioration de la rigidité (120) étant disposées dans une direction de propagation de l'oscillation.

2. Appareil de génération d'énergie à éolienne selon la revendication 1,
   dans lequel, lorsque l'intervalle est défini comme un intervalle L et une longueur d'onde de l'oscillation provoquée pendant le fonctionnement de la génératrice (114) ou de la transmission (107) est définie comme λ, l'intervalle L des parties d'amélioration de la rigidité (120) est établi de façon à satisfaire une relation suivante, en utilisant un nombre entier « n ».

$$L = \frac{\lambda}{2}\left(n - \frac{1}{2}\right)$$

3. Appareil de génération d'énergie à éolienne selon la revendication 2,
   dans lequel les parties d'amélioration de la rigidité (120) comprennent au moins un d'un élément de nervure (122) disposé sur la surface circonférentielle intérieure ou la surface circonférentielle extérieure, d'un palier (124) de l'arbre de rotor (106), ou d'une bride (126).

4. Appareil de génération d'énergie à éolienne selon l'une quelconque des revendications 1 à 3,
   dans lequel la transmission (107) comprend une pompe hydraulique (110) configurée pour être entraînée par la rotation de l'arbre de rotor (106), et un moteur hydraulique (112) configuré pour être entraîné par de l'huile sous pression générée dans la pompe hydraulique (110) et pour permettre à la génératrice (114) de générer de l'énergie électrique.

## FIG. 1

103
102
104a
104
106 107 114
100
G
105
111

FIG. 2

# FIG. 3

# FIG. 4

L  L

W1  106

P1

122  122  122

# FIG. 5

L  L

W2  106

P2

122  122  122

FIG. 6

# FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3342148 B
- EP 1533521 A1
- WO 2009080028 A2
- EP 1065374 A2